Europäisches Patentamt

European Patent Office

Office européen des brevets

(11) Publication number: **0 213 822**
**A2**

(12) # EUROPEAN PATENT APPLICATION

(21) Application number: 86306168.5

(51) Int. Cl.⁴: **H04Q 1/44** , H04M 15/00

(22) Date of filing: 08.08.86

(30) Priority: 09.08.85 GB 8520036

(43) Date of publication of application:
**11.03.87 Bulletin 87/11**

(84) Designated Contracting States:
**BE CH DE FR IT LI NL SE**

(71) Applicant: **PLESSEY OVERSEAS LIMITED
Vicarage Lane
Ilford Essex IGI 4AQ(GB)**

(72) Inventor: **Byrne, Richard
c/o CPT
Cork(IE)**

(74) Representative: **Sorenti, Gino
Intellectual Property Department The
Plessey Company plc 2-60 Vicarage Lane
Ilford Essex IG1 4AQ(GB)**

(54) **Signal generators.**

(57) A signal generator for deriving an approximately sinusoidal output signal of a selectable frequency from a square wave input signal of a different frequency in which a phase locked loop controlled oscillator (1) steps a bi-directional shift register (5) at a frequency determined by the division of a divider - (12). Four patterns are stepped through the shift register (5) to cause outputs of 1000, 1100, 1110, 1111 in one direction whereupon a further divider - (17) causes the shift direction to change causing outputs of 1110, 1100, 1000 and 0000. Combining the signal pattern through resistors (17-20) which weight the output signals results in an approximately sinusoidal signal at an output (22).

EP 0 213 822 A2

# SIGNAL GENERATORS

The present invention relates to signal generators and more particularly but not exclusively to an electronic signal generator for use in telecommunications exchanges.

In our co-pending patent application no line terminating apparatus for use in a telecommunications exchange is described. Among the facilities provided by the line terminating apparatus described therein is the provision to the line of signals to operate remote metering apparatus.

Different telephone administrations specify different tone frequencies to be applied for such operations but one principal requirement is for a sine wave signal deduced from a control frequency signal available in the exchange.

One object of the present invention is to provide a tone generator capable of producing signals suitable for operating remote metering apparatus.

According to the present invention there is provided a signal generator comprising a bi-directional shift register which circulates a predetermined data pattern and which has a multiplicity of outputs and a divider circuit wherein, in use, a reference signal having a frequency at a predetermined multiple of a required output frequency is applied to a shift input of said shift register and to an input of said divider circuit, said divider circuit is arranged to divide said input signal frequency by said predetermined multiple to provide a control signal to a directional input of said shift register to cause said shift register to change the direction of shift at the required output frequency and said multiplicity of outputs of the shift register are coupled together through respective signal weighting means to a signal output whereby a square wave input signal is converted to an approximately sinusoidal output signal at a different frequency.

Preferably said reference frequency signal is derived from an oscillator the frequency of which is controlled by a phase-locked loop which compares a signal derived from the reference frequency signal by said divider circuit with another fixed frequency.

Said divider circuit may have a plurality of outputs one of said outputs having a fixed division ratio to provide said control signal frequency and another of said outputs having a programmable division ratio to provide the comparison signal to said phase-locked loop whereby the output frequency may be changed.

The shift register may carry four binary patterns each comprising a single transition from one binary value to the other binary value. The shift register may have four outputs.

The approximately sinusoidal signal output may be smoothed by use of a resistor-capacitor filtering arrangement.

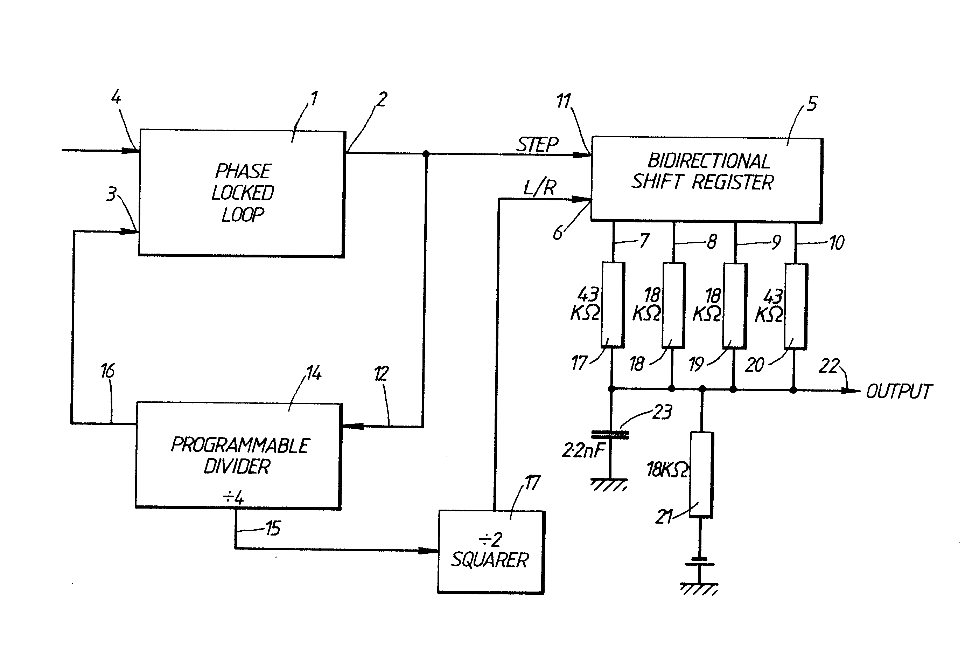

A signal generator in accordance with the invention will now be described by way of example only with reference to the accompanying drawing which is a block schematic diagram of the generator.

Referring to the drawing the generator comprises a phase locked loop controlled oscillator 1 the output 2 of which is adjusted in frequency until the signals on its two inputs 3 and 4 are in phase with each other.

The signal at the output 2 is connected to an input 11 of a bi-directional shift register 5 to cause it to shift at the frequency of that signal, the contents shifting left or right in dependance upon a signal applied to a control input 6 of the device. The content of the shift register 5 is binary "1000" which when shifted (effectively rotated) steps through to provide a sequence at its outputs 7-10 of 1000, 1100, 1110, 1111 and the reverse thereof.

The left/right shift control on the input 6 is derived from the input frequency signal applied at the input 11 by connecting the output 2 of the oscillator 1 to the input 12 of a programmable divider circuit 14. The programmable divider 14 has one fixed output 15 which provides an output signal at the input frequency divided by four.

This signal is further divided by two in a fixed divider circuit 17 which also squares up the signal envelope to ensure a fifty-fifty duty cycle is applied to the control input 6 of the shift register 5.

The programmable output of the divider 14 provides a signal indicative of the output signal of the oscillator 1 at a frequency for comparison with the reference frequency applied at the input 4.

The outputs 7-10 of the shift register 15 are connected to respective weighting resistors 17-20 the opposed ends of which are coupled together at a signal output 22 in a common resistor chain including a resistor 21 connected to a negative battery supply. In parallel with the resistor 21, a capacitor 23 is connected to earth effectively providing a single pole filter to smooth the output stepped sine wave signal.

So that the operation of the circuit may be readily understood consider an eight kilohertz frame synchronisation signal applied to the reference input 4 with a requirement for a sixteen kilohertz sine wave at the output 22.

**0 213 822**

In this case the programmable divider 14 is set to divide its input signal by sixteen to provide the signal to its output 16 and hence the input 3 of the oscillator 1. Accordingly the phase locked loop stabilizes the signal at the output 2 at 128 kilohertz (8 x 16). Accordingly the shift register will step at the 128 kilohertz rate.

Now the output 15 provides a thirty-two kilohertz signal (128 -4) which is further divided by two in the divider 17 to provide a sixteen kilohertz fifty-fifty duty cycle signal to the control input 6. Thus each full cycle on the control input 6 covers eight steps of the shift register 15 four to the right and four to the left. The full cycle sequence is therefore:-

1000

1100

1110

1111

1110

1100

1000

0000

Weighting these signals in which '1' represents plus five volts using 43 kilo ohm resistors on the outer outputs 7, 10 and 18 kilo ohm resistors on the inner outputs 8, 9 in combination with a common resistor 21 also of 18 kilo ohms connected to negative five volts provides a stepped output voltage to the output 22 which is smoothed to near sinusoidal by a 2.2. nano farad capacitor connected to earth, the output frequency being sixteen kilohertz. The output 22 is then connected to a summing amplifier (not shown) which may be followed by further filtering.

Now if the desired output frequency is twelve kilohertz, setting the programmable divider 14 to divide its input frequency by twelve to provide the output signal at the output 16 results in the oscillator settling at a frequency of ninety-six kilohertz. This frequency when divided by four in the divider 14 and then by two in the divider 17 provides the desired twelve kilohertz fifty-fifty duty cycle signal at the control input 6 while effectively still causing the shift register 5 to shift four steps right and four steps left at the ninety-six kilohertz rate providing a twelve kilohertz sine wave signal at the output 22.

It is here noted that other values of division in the programmable divider 14 may be used to achieve other required frequency outputs. It will, however, be realised that changes to the values of the resistor 21 and capacitor 23 will be required to adjust cut-off values of the single pole filter thereby provided.

In a practical circuit the oscillator 1 may be an integrated circuit type 4046, the shift register 5 an integrated circuit type CD40194B and the divider 14 and 17 respectively integrated circuits types 74LS163 and 74LS74 all of which are commercially available.

It will be realised that whilst as hereinbefore described only a four stage shift register has been used, longer shift registers may be employed stepped at higher frequencies and using a greater spread of weighting resistors if improved smoothing of the output signal is required.

**Claims**

1. A signal generator comprising a bi-directional shift register which circulates predetermined data patterns and which has a multiplicity of outputs and a divider circuit wherein, in use, a reference signal having a frequency at a predetermined multiple of a required output frequency is applied to a shift input of said shift register and to an input of said divider circuit, said divider circuit is arranged to divide said input signal frequency by said predetermined multiple to provide a control signal to a directional input of said shift register to cause said shift register to change the direction of shift at the required output frequency and said multiplicity of outputs of the shift register are coupled together through respective signal weighting means to a signal output whereby a square wave input signal is converted to an approximately sinusoidal output signal at a different frequency.

2. A signal generator as claimed in claim 1 comprising an oscillator which generates said reference frequency signal and a phase locked loop circuit which controls the oscillator, said phase locked loop circuit being arranged to compare a signal derived from said reference frequency signal by a divider circuit and a further fixed frequency signal to derive an output signal for controlling the oscillator.

3. A signal generator as claimed in claim 2 wherein said divider circuit has a plurality of outputs one of which is from a divider having a fixed division ratio to provide said control signal and another of which is from a divider having a programmable division ratio to provide the comparison signal to the phase locked loop circuit whereby the output frequency of the signal generator may be changed by altering the programming of said divider.

4. A signal generator as claimed in claim 1 wherein the shift register holds four binary patterns each comprising a single transition from one binary value to the other binary value whereby each step of the shift register causes only one output thereof to change state.

5. A signal generator as claimed in claim 1 wherein the shift register has four outputs two of which are weighted by respective resistor means having a first fixed resistance value and the other two of which are weighted by respective resistor means having a second fixed resistance value.

6. A signal generator as claimed in claim 1 comprising a filtering arrangement connected to the signal output to effect smoothing of said approximately sinusoidal output signal.

STEP

L/R

PHASE LOCKED LOOP

BIDIRECTIONAL SHIFT REGISTER

43 KΩ    18 KΩ    18 KΩ    43 KΩ

OUTPUT

2·2nF

18KΩ

PROGRAMMABLE DIVIDER

÷4

÷2 SQUARER

0 213 822